# EUROPEAN PATENT APPLICATION

(11) **EP 2 390 882 A1**
(43) Date of publication of application: **30.11.2011**
(21) Application number: 11178109.2
(22) Date of filing: 30.10.2006
(51) Int. Cl.: G11B 33/04, B65D 85/00

(54) **Multi disc tray**

(30) Priority: 02.11.2005 US 732502 P
(62) Divisional of application: 06836866.1
(71) Applicant: Atlas AGI Holdings, LLC, Greenwich CT 06830 (US)
(72) Inventor: Gelardi, John A., Kennebunkport, ME Maine MA 04046 (US)
(74) Representative: Coulson, Elizabeth Eve

(57) **Abstract**

An apparatus suitable for holding a disc, the apparatus comprising a base portion (100); within the base portion at least one disc receiving area (111,112); for each disc receiving area, at least one fixed retaining means (120) for limiting movement of a received disc normal to the plane of the disc; and for each disc receiving area, at least one movable retaining means (151,152) for limiting movement of a received disc in the plane of the disc. The movable retaining means comprising a flexing member attached to the base portion and the apparatus further comprising an inhibiting means to prevent movement of said movable retaining means. Optionally, the apparatus comprises a cover (310), which provides the inhibiting means. The cover is structured relative to the moveable retaining means such that upon closing the base portion with the cover (310), a spine portion (320) of the cover abuts the moveable retaining means thereby restricting movement of the moveable retaining means and thus locking the disc within the apparatus.

## Description

Various packaging structures have been used for containing optical media such as CDs and DVDs. Packaging may include paper or paperboard boxes, injection molded cases, and combinations thereof. Often it is desired to hold multiple discs in a single package, and in some cases to overlap the discs to save frontal space of the package. One example of such a package, where the discs are held in an overlapping geometry, is US Patent 5,743,390 which discloses a case holding multiple levels of discs in planes parallel to a major surface of the case, and having optical swing-out structures to hold discs. Another example is US Patent 5,595,308 which discloses a device for holding multiple discs or disc cases in planes parallel to each other but at an angle to a major surface of the device.

Optical disc packages sometimes utilize hubs that retain the disc by gripping the internal circumference of the disc (the centre hold), either by friction alone or by a detent mechanism overcome by slight force on the disc or on the detent mechanism. Other packages may simply use gravity or friction to retain the disc, for example sleeve devices such as disclosed in US Patent 5,762,246.

As the data storage density of optical discs continues to increase, it becomes more important to protect the discs from surface wear, warpage, and delamination.

### SUMMARY

According to a first aspect, the invention provides an apparatus suitable for holding a disc, the apparatus comprising: a base portion defining a volume; within the base portion at least one disc receiving area to receive a disc; for each disc receiving area, at least one fixed retaining means for limiting movement of a received disc normal to the plane of the disc; and for each disc receiving area, at least one movable retaining means for limiting movement of a received disc in the plane of the disc, said movable retaining means comprising a flexing member attached to said base portion and the apparatus further comprising an inhibiting means to prevent movement of said movable retaining means.

Optionally, the apparatus comprises a cover, wherein the cover provides the inhibiting means and is structured relative to the moveable retaining means such that upon closing the base portion with the cover, a spine portion of the cover abuts the moveable retaining means thereby restricting movement of the moveable retaining means and thus locking a disc within the apparatus.

Optionally, said inhibiting means is an inside surface of a cover attached to said base portion.

Optionally, said inhibiting means is an inside surface of a spine portion of a cover attached to said base portion.

Optionally, said inhibiting means is an inside surface of a side portion of a cover attached to said base portion.

Optionally, wherein said movable retaining means comprises a flexing member attached to the base portion of the apparatus.

Optionally, said flexing member is formed as part of a side wall of said base portion.

Optionally, said flexing member is operable in a non-flexed state to prevent movement of a disc, received in the base portion, in the plane of the disc.

Optionally, said flexing member is operable in a flexed state to allow movement of said received disc in the plane of the disc.

Optionally, said flexing member is moved from a non-flexed state to a flexed state by contact with said disc, when said disc moves past said flexing member during disc movement in the plane of the disc.

Optionally, said receiving area is within said volume of said base portion, and said received disc rests in a plane at an angle between 1 to 10 degrees relative to the plane of said base portion.

Optionally, two or more said receiving areas are provided, each said receiving area at least partially overlapping at least one other receiving area.

Optionally, said fixed retaining means comprises an overhanging ledge overhanging a peripheral point on said received disc.

Optionally, at least one supporting pivot contacting a peripheral point on said disc is provided to limit contact of non-peripheral disc areas with said base portion.

Optionally, said disc is able to tilt at least slightly upon said supporting pivot.

According to second aspect, the invention provides a package comprising an apparatus according to any preceding paragraph and at least one disc held on a fixed retaining means.

This invention provides for holding discs in a package or tray element that is combined with other elements to form a package. The package may hold multiple optical disc media in an overlapping orientation that permits the user to view all discs, and may provide disc locking arms that retain the discs in place. The locking arms each retain a peripheral point on a respective disc and prevent unintended movement of the disc from the package. When the package is in an open configuration, the locking arms each provide a light retaining force on their respective disc, allowing a single disc to be removed or replaced at will while other discs remain secured. When the package is in a closed configuration, the locking arms each provide a stronger retaining force on their respective disc, holding the disc in place despite any movement of the package. The discs are held at a minimum number of peripheral points, and are allowed to teeter slightly to protect against damage during handling.

### BRIEF DESCRIPTION OF THE DRAWINGS

FIG. 1 illustrates a perspective view of a tray in an embodiment according to the invention;
FIG. 2 illustrates a perspective view of a tray containing discs in an embodiment according to the invention;
FIG. 3 illustrates a detail view of flexing arms in the side of a tray according to the invention;
FIG. 4 illustrates a detail view showing the flexing arms in a retaining position according to the invention;
FIG. 5 illustrates a detail view showing the flexing arms in a releasing position according to the invention;
FIG. 6 illustrates a cross section view of a tray according to the invention;
FIG. 7 illustrates a perspective view of a container incorporating the tray according to the invention, in an open configuration;
FIG. 8 illustrates a perspective view of a container incorporating the tray according to the invention, in a partially closed configuration.

### DETAILED DESCRIPTION

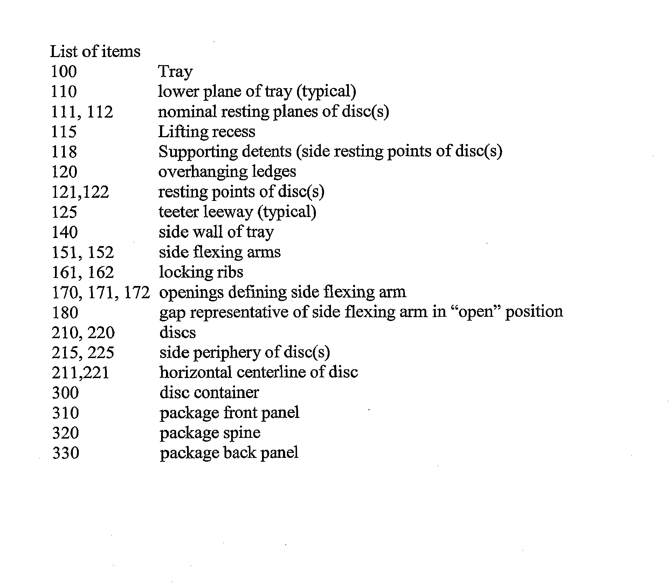

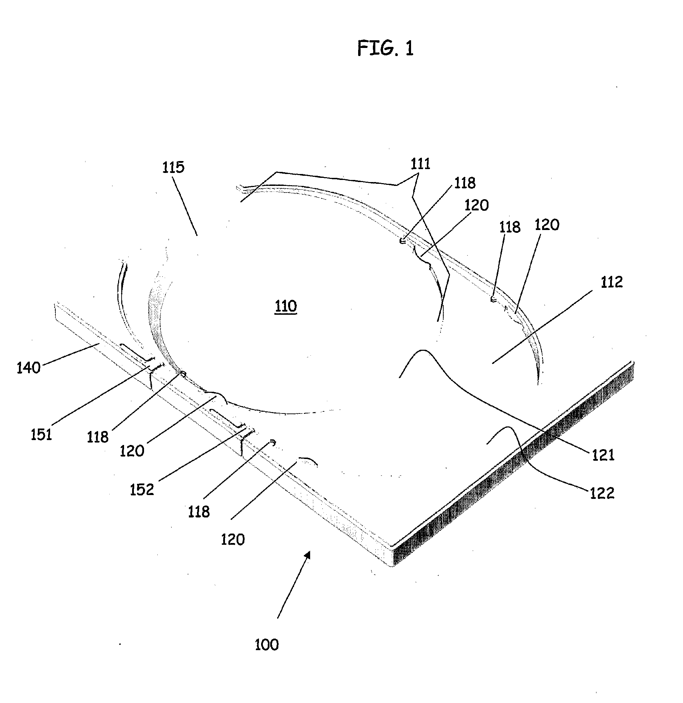

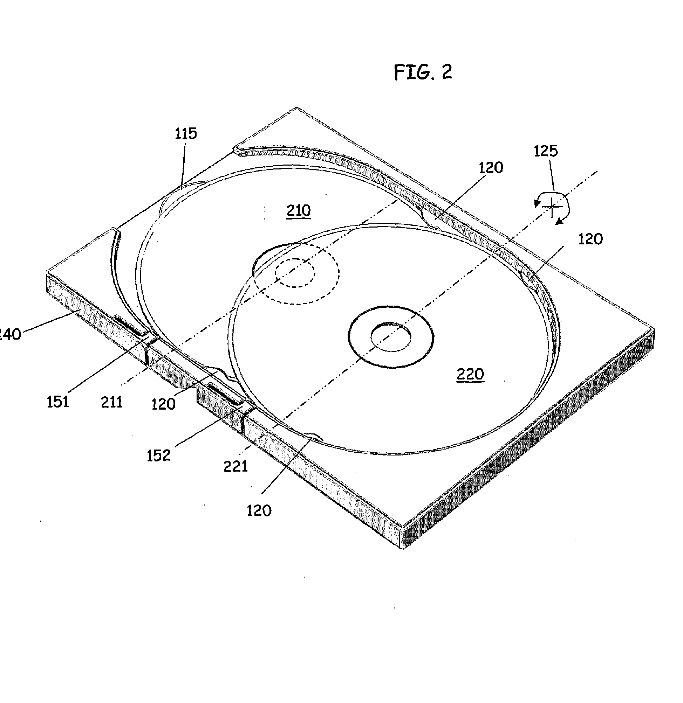

FIG. 1 illustrates a perspective view of a tray or base 100 in an embodiment according to the invention. The tray is preferably molded from a plastic material. A first nominal resting surface 111 is provided for a first disc 210 (shown in FIG. 2, a perspective view of a tray containing discs). Nominal resting surface 111 is generally planar at an angle to the major plane of the tray. The shape of nominal resting surface 111 may be an approximately circular outline of varying width as shown. A depressed central region 110, not part of the nominal resting surface, is at least slightly below the plane of the nominal resting surface, and which may be as low as the back or bottom surface of the tray.

A second nominal resting surface 112 is provided for a second disc 220 (shown in FIG. 2). Nominal resting surface 112 is generally planar and at an angle to the major plane of the tray. The nominal resting surface 112 may have a crescent shape as shown.

Rather than having discs 210 and 220 rest directly upon nominal resting surfaces 111 and 112 respectively, it may be preferred to minimize contact between the discs and the nominal resting surfaces so as to protect the data surface of the discs. Therefore supporting detents 118 may be provided to support selected points along the periphery of the discs, for example, by providing supporting detents 118 at each side of the tray, located approximately the horizontal centerline of each disc. When the tray 100 is laying flat (as shown in FIG. 1 and 2), the periphery of disc 210 may rest on a pair of detents 118 and upon point 121 on nominal resting surface 111. The periphery of disc 220 may likewise rest on a pair of detents, and upon resting point 122 on nominal resting surface 112. However, each disc may teeter slightly as represented by teeter leeway 125 shown for disc 220. The teeter leeway makes it easier to remove and replace disc 220, for example to grasp its edge, or slide it from and into the tray. A lifting recess 115 is also provided in tray 100 to facilitate grasping disc 210.

To help retain the discs in tray 100, overhanging ledges 120 may be provided. As shown in FIG. 2, an overhanging ledge 120 is provided to retain each side of each disc. Once a disc has been slid into the tray, the overhanging ledge retains the disc so that it cannot be removed in the direction normal to the tray (that is, upward from the tray as shown in FIG. 2).

Side flexing arms 151 and 152 may be provided to help retain discs 210 and 220 respectively in the tray 100. The side flexing arms may be provided in a side wall 140 of tray 100.

With this design, the discs are positioned at an angle to the major planes of the tray, and are positioned in the tray such that all discs can be viewed. The discs slide into and out of their independent positions within the tray, and are retained in the tray by overhanging ledges 120, supporting detents 118, and locking ribs 161, 162 (described below) that are positioned on flexing side arms 151, 152 respectively that are extensions of the side wall 140 of the tray.

Discs can be inserted and removed independently of each other and without having to remove the other discs from the tray. The locking elements of the tray work in relationship to corresponding elements of the package such as other trays and the inner surface panels of a multi panel outer cover or molded case as described below. The discs each rest on a set of supporting detents 118 that allow the disc to pivot or teeter on the axis between the detents. Allowing the disc to move/pivot on this axis facilitates the insertion and removal of disc from the package without having to remove co-packaged discs located in the tray.

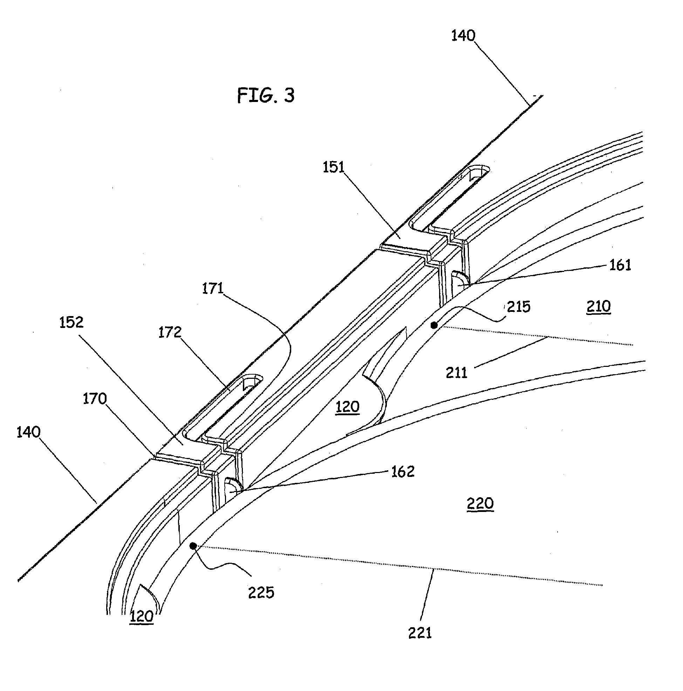

FIG. 3 illustrates a detail view of side flexing arms 151, 152 in the side of a tray according to the invention. The side flexing arms are preferably part of tray side wall 140, and may be formed for example by providing separation lines or gaps 170, 171, and 172 that permit the side flexing arm 152 to flex in the general plane of the tray. The side flexing arms are part of a disc retaining and locking system. Side flexing arms 151, 152 are situated slightly outward (in the direction of disc removal) from the at-rest horizontal centre axes 211, 221 of discs 210, 220 respectively. The side flexing arms provide enough force to hold locking ribs 161, 162 inward, retaining the discs in the tray 100. Thus peripheral points 215, 225 representing the largest width of the disc are not able to slide past locking ribs 161, 162 unless the side flexing arms 151, 152 are able to flex outward. The side flexing arms are able to flex outward to allow the user to slide the disc(s) from or into the tray, unless the flexing arms are restrained, as when an outer cover of a package is closed around tray 100, as described later. The design provides for a passive locking / unlocking of the disc(s) held in the tray. A consumer does not have to actively manipulate any element or part of the disc package or tray to lock and unlock the discs. An advantage of this design is the insertion and removal of a disc into or out of the tray without having to remove other discs from the package. The invention allows each disc to be inserted and removed from the package without grossly disturbing the other disc(s).

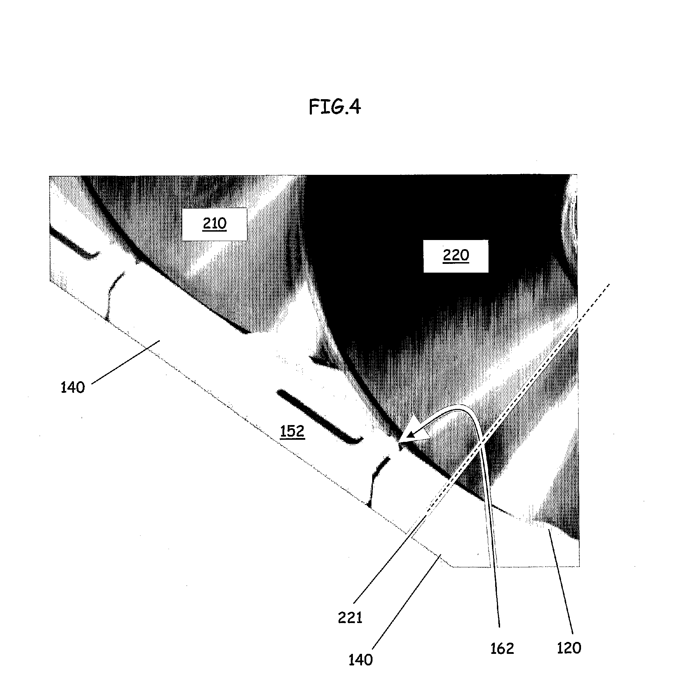

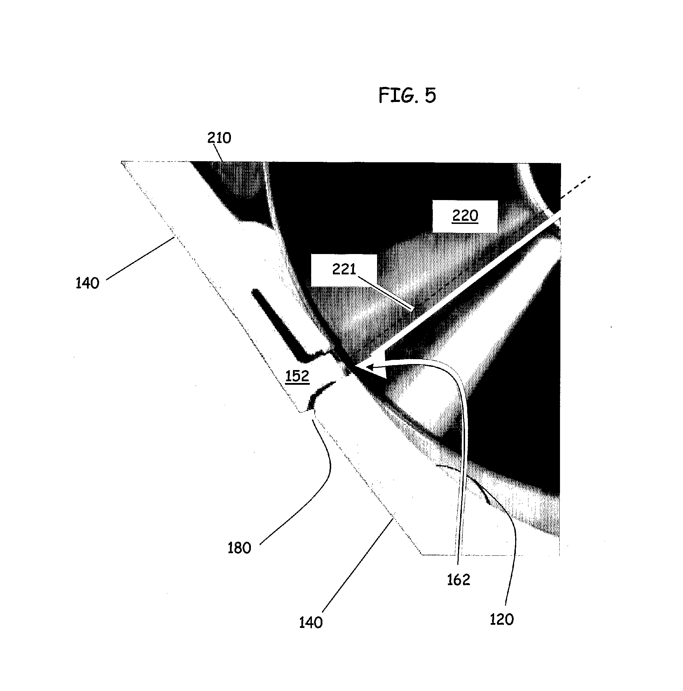

FIGs. 4 and 5 illustrate detail views showing a side flexing arm 152 in the retaining and releasing positions respectively. In FIG. 4, disc 220 is in the retained or 'storage' position, where it would be located after having been slid into the tray. The disc is retained from moving up from the general plane of the tray by overhanging ledge 120 (one on the near side of the disc as shown, and one also on the diametrically opposed edge of the disc, not shown). Flexing side arm 152 with its locking rib 162 contacts the periphery of the disc, slightly forward from the disc's maximum width at its horizontal centreline 221. The locking rib 162 thus prevents sliding movement of the disc 220 within the general plane of the tray.

In FIG. 5, disc 220 has been moved by sliding it slightly toward the removal position. As the centreline 221 of the disc reaches locking rib 162, it pushes the rib outward against the force of flexing side arm 152. This sliding movement of disc 220 also brings it out from underneath overhanging ledge 120. The disc is then free to be removed from the tray either by sliding outward in the general plane of the disc, or by tilting upward and lifting it out of the plane of the tray. Note that as the locking rib 162 is pushed outward by disc 220, the flexing side arm 152 bends temporarily out of line with the side wall 140 of the tray as shown by gap 180. This out-of-line bending by flexing side arm 152 is only possible when nothing obstructs the side wall 140.

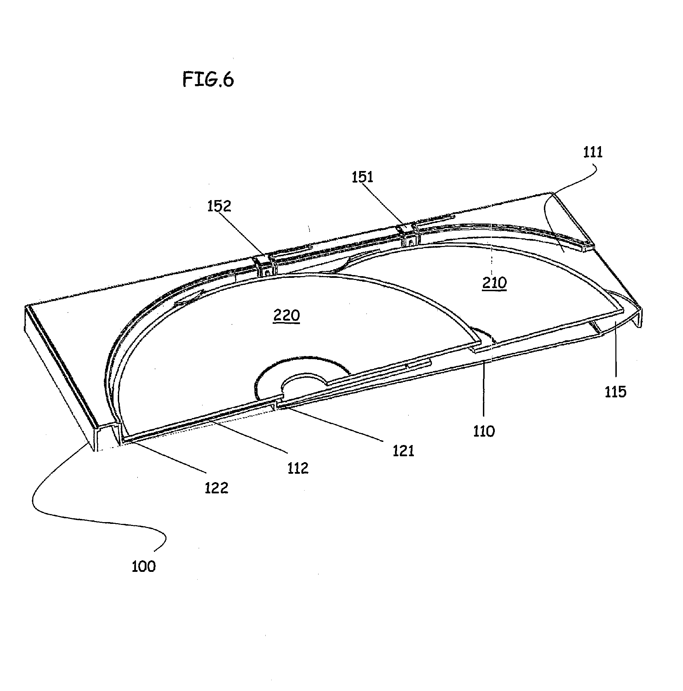

FIG. 6 illustrates a cross section view of a tray according to the invention. The discs 210, 220 are tilted at an angle to the major plane of the tray. Although disc 210 appears to rests on nominal resting plan 111 (only partially visible in FIG. 6), there is actually a slight separation, due to disc 210 being supported by supporting detents 118 (not shown in FIG. 6). This prevents the disc from resting in direct contact with the surfaces of the tray, such as surface 111 that may otherwise contact large areas of disc 210. Likewise, although disc 220 appears to rests on nominal resting plane 112, there is actually a slight separation, due to disc 220 being supported by supporting detents 118 (not shown). This prevents the disc from resting in direct contact with the surfaces of the tray, such as surface 112 that may otherwise contact large areas of disc 220. Keeping the disc away from these surfaces of the tray prevents scuffing and scratching from insertion and removal of the discs, and during handling of the package. When a disc is in its storage position, it is partly supporting by a detent 118 on each side. Particularly, if the case tray 100 is in a lay-flat orientation, the periphery of the discs will also be supported by the tray at contact points 121 and 122. The detents 118 and the contact points 121, 122 do not contact the central, data-bearing surfaces of the discs. Furthermore, the discs may teeter on the detents 118, so that if the tray is flexed during shipping, handling, or storage, the discs are able pivot slightly and minimize the chance of their warping or delaminating. Thus exposure to intermittent or even continuous minor distortions of the tray will not damage the discs.

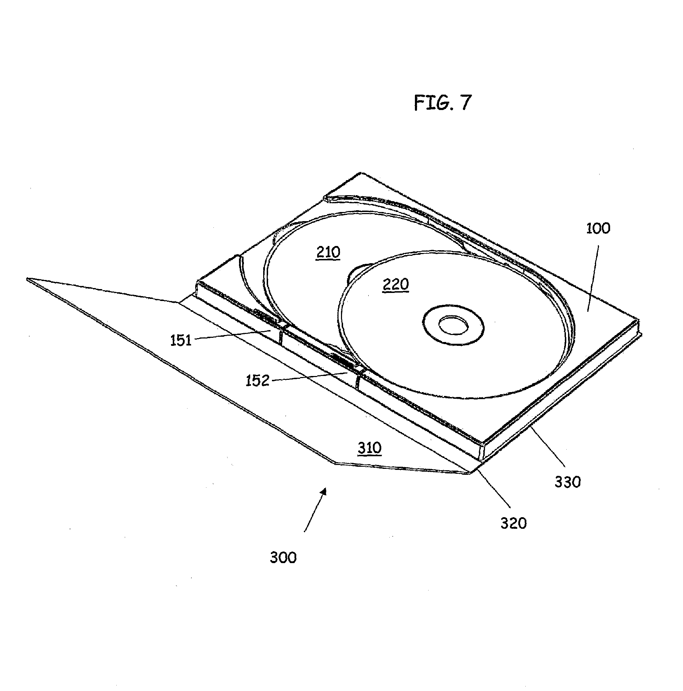

FIG. 7 illustrates a perspective view of a container 300 incorporating the tray, in an open configuration. In this example, the tray is used with a casing, which may have a front panel 310, a spine or side panel 320, and a back panel 330. These parts may be formed separately or together with the tray 100. The flexing side arms 151, 152 are free to move, since no part of the casing obstructs their movement. Thus the discs 210, 220 may be removed from the tray as described previously. The flexing side arms 151, 152 flex outward as discs are slid in and out of the tray.

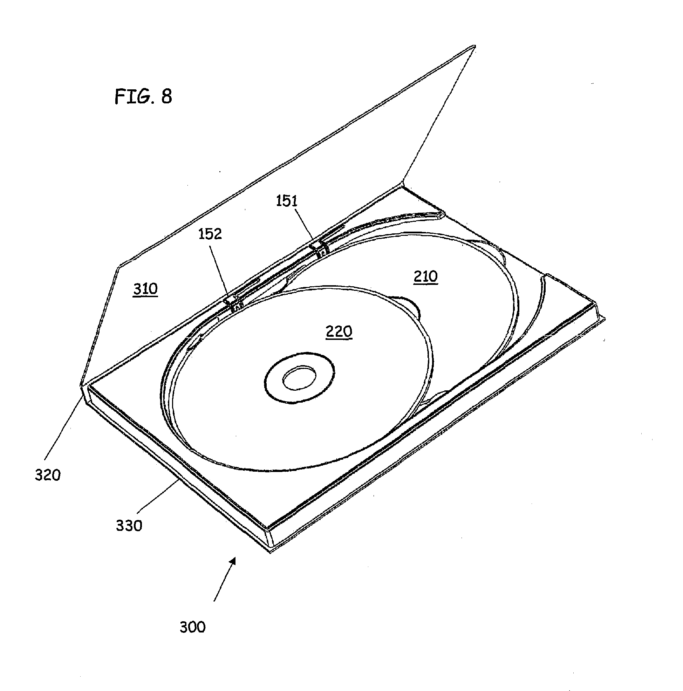

FIG. 8 illustrates a perspective view of a container incorporating the tray, in a partially closed configuration. The flexing side arms are obstructed from free movement by an inner surface portion of an side panel 320 as, in closing the container, the side panel 320 folds toward the flexing side arms. In the closed position the flexing side arms 151, 152 cannot flex and thus they lock the discs 210, 220 in place.

Methods of making and using the disc container in accordance with the invention should be readily apparent from the mere description as provided herein. No further discussion or illustration of such products or methods, therefore, is deemed necessary.

While preferred embodiments of the invention have been described and illustrated, it should be apparent that many modifications to the embodiments and implementations of the invention can be made without departing from the spirit or scope of the invention. Although the preferred embodiments illustrated herein have been described in connection with an injection molded plastic structure, these embodiments may easily be implemented in accordance with the invention in other structures or materials. Although the example given is for two a tray containing two discs, the design can be readily extended to trays containing more than two discs.

It is to be understood therefore that the invention is not limited to the particular embodiments disclosed (or apparent from the disclosure) herein, but only limited by the claims appended hereto.

## Claims

1. An apparatus suitable for holding a disc, the apparatus comprising: a base portion (100) defining a volume; within the base portion at least one disc receiving area (111, 112) to receive a disc; for each disc receiving area, at least one fixed retaining means (120) for limiting movement of a received disc normal to the plane of the disc receiving area; and for each disc receiving area, at least one movable retaining means (151, 152) for limiting movement of a received disc in the plane of the disc, said movable retaining means (151, 152) comprising a flexing member attached to said base portion (100) and the apparatus further comprising an inhibiting means (to prevent movement of said movable retaining means.

2. An apparatus according to claim 1 wherein the apparatus comprises a cover, wherein the cover provides the inhibiting means and is structured relative to the moveable retaining means such that upon closing the base portion with the cover, a spine portion of the cover abuts the moveable retaining means thereby restricting movement of the moveable retaining means and thus locking a disc within the apparatus.

3. The apparatus as claimed in claim 1 wherein said inhibiting means is an inside surface of a cover attached to said base portion.

4. The apparatus as claimed in claim 3, wherein said inhibiting means is an inside surface of a spine portion of a cover attached to said base portion.

5. The apparatus as claimed in claim 3, wherein said inhibiting means is an inside surface of a side portion of a cover attached to said base portion.

6. The apparatus as claimed in claim 5, wherein said flexing member (151, 152) is formed as part of a side wall (140) of said base portion.

7. The apparatus as claimed in claim 6, wherein said flexing member (151, 152) is operable in a non-flexed state to prevent movement of a disc, received in the base portion (100), in the plane of the disc.

8. The apparatus as claimed in claim 6 or 7, wherein said flexing member (151, 152) is operable in a flexed state to allow movement of said received disc in the plane of the disc.

9. The apparatus as claimed in any one of claims 6 to 8, wherein said flexing member is moved from a non-flexed state to a flexed state by contact with said disc, when said disc moves past said flexing member during disc movement in the plane of the disc.

10. The apparatus of any preceding claim, in which said receiving area is within said volume of said base portion, and said received disc rests in a plane at an angle between 1 to 10 degrees relative to the plane of said base portion.

11. The apparatus as claimed in any preceding claim comprising two or more said receiving areas, each said receiving area at least partially overlapping at least one other receiving area.

12. The apparatus as claimed in any preceding claim, wherein said fixed retaining means comprises an overhanging ledge (120) overhanging a peripheral point on said received disc.

13. The apparatus as claimed in any preceding claim, further comprising at least one supporting pivot contacting a peripheral point on said compact disc to limit contact of non-peripheral disc areas with said base portion and wherein said disc is able to tilt at least slightly upon said supporting pivot.

14. A package comprising an apparatus according to any preceding claim and at least one disc (210, 220), the or each disc held by a fixed retaining means and a moveable retaining means.
